# EUROPÄISCHE PATENTANMELDUNG

(11) **EP 3 361 427 A1**
(43) Veröffentlichungstag der Anmeldung: **15.08.2018**
(21) Anmeldenummer: 17155784.6
(22) Anmeldetag: 13.02.2017
(51) Int. Cl.: G06Q 10/06, G05B 23/02

(54) **PRODUKTIONSLEITSYSTEM**

(71) Anmelder: W. Pelz GmbH & Co. KG, 23812 Wahlstedt/Holstein (DE)
(72) Erfinder: Studt, Johann-Hinrich, 23795 Bad Segeberg (DE)
(74) Vertreter: Hauck Patentanwaltspartnerschaft mbB

(57) **Zusammenfassung**

Produktionsleitsystem umfassend
• eine elektronische Datenverarbeitungsanlage,
• eine erste Datenschnittstelle der elektronischen Datenverarbeitungsanlage zum Übertragen von Produktionssignalen, die mit einer Produktionsanlage verbindbar ist,
• mindestens ein Eingabegerät zur manuellen Dateneingabe, das mit der elektronischen Datenverarbeitungsanlage verbunden ist,
• einen Monitor, der mit der elektronischen Datenverarbeitungsanlage verbunden ist,
• wobei die elektronische Datenverarbeitungsanlage ausgebildet ist, über die erste Datenschnittstelle Produktionssignale zu erfassen, durch Auswerten erfasster Produktionssignale Produktionsdaten insbesondere über Produktionsstörungen zu ermitteln, auf dem Monitor Produktionsdaten anzuzeigen und über das Eingabegerät eingegebene Störungsgründe für Produktionsstörungen auf dem Monitor anzuzeigen und/oder abzuspeichern und/oder über eine mit der elektronischen Datenverarbeitungsanlage verbundene zweite Datenschnittstelle der elektronischen Datenverarbeitungsanlage einem Rechnernetz zur Verfügung zu stellen, und
• wobei das Eingabegerät und/oder die elektronischen Datenverarbeitungsanlage ausgebildet ist, verschiedene Eingabebereiche des Eingabegeräts mit unterschiedlichen Störungsgründen für Produktionsstörungen zu belegen, sodass beim Betätigen eines ausgewählten Eingabebereiches der diesem Eingabebereich zugeordnete Störungsgrund an die elektronische Datenverarbeitungsanlage gemeldet wird.

## Beschreibung

Die Erfindung betrifft ein Produktionsleitsystem zur Führung, Lenkung, Steuerung oder Kontrolle von Produktionsanlagen unter Einsatz einer elektronischen Datenverarbeitungsanlage.

Produktionsleitsysteme werden insbesondere eingesetzt, um die Abwicklung von Aufträgen zu steuern, den Zugang von Personal zur Abwicklung von Aufträgen zu kontrollieren und die Leistungsdaten, Produktionsstillstände und andere Produktionsstörungen und sonstige Produktionsdaten zu erfassen, zu dokumentieren und anzuzeigen. Bei herkömmlichen Produktionsleitsystemen werden die Produktionsstörungen von den Benutzern, welche mit der Ausführung der Aufträge betraut sind, individuell beschrieben und bewertet. Dies erschwert die Auswertung von Produktionsstörungen und leistet einer unzureichenden Erfassung von Störungsmeldungen Vorschub.

Der Erfindung liegt die Aufgabe zugrunde, ein Produktionsleitsystem zur Verfügung zu stellen, das die Erfassung und Auswertung von Produktionsstörungen erleichtert.

Die Aufgabe wird durch ein Produktionsleitsystem mit den Merkmalen von Anspruch 1 gelöst. Vorteilhafte Ausgestaltungen der Aufgabe sind in Unteransprüchen angegeben.

Das erfindungsgemäße Produktionsleitsystem umfasst:
- eine elektronische Datenverarbeitungsanlage,
- eine erste Datenschnittstelle der elektronischen Datenverarbeitungsanlage zum Übertragen von Produktionssignalen, die mit einer Produktionsanlage verbindbar ist,
- mindestens ein Eingabegerät zur manuellen Dateneingabe, das mit der elektronischen Datenverarbeitungsanlage verbunden ist,
- einen Monitor, der mit der elektronischen Datenverarbeitungsanlage verbunden ist,
- wobei die elektronische Datenverarbeitungsanlage ausgebildet ist, über die erste Datenschnittstelle Produktionssignale zu erfassen, durch Auswerten erfasster Produktionssignale Produktionsdaten insbesondere über Produktionsstörungen zu ermitteln, auf dem Monitor Produktionsdaten anzuzeigen und über das Eingabegerät eingegebene Störungsgründe für Produktionsstörungen auf dem Monitor anzuzeigen und/oder abzuspeichern und/oder über eine mit der elektronischen Datenverarbeitungsanlage verbundene zweite Datenschnittstelle der elektronischen Datenverarbeitungsanlage einem Rechnernetz zur Verfügung zu stellen, und
- wobei das Eingabegerät und/oder die elektronische Datenverarbeitungsanlage ausgebildet ist, verschiedene Eingabebereiche des Eingabegeräts mit unterschiedlichen Störungsgründen für Produktionsstörungen zu belegen, sodass beim Betätigen eines ausgewählten Eingabebereiches der diesem Eingabebereich zugeordnete Störungsgrund an die elektronische Datenverarbeitungsanlage gemeldet wird.

Das erfindungsgemäße Produktionsleitsystem weist mit dem Eingabegerät zur manuellen Dateneingabe (Eingabegerät) eine einfache Eingabemöglichkeit für Stillstandsgründe und andere Störungsgründe für Produktionsstörungen auf. Die Eingabebereiche des Eingabegeräts sind nämlich mit unterschiedlichen Störungsgründen belegt, sodass der Benutzer durch bloßes Betätigen eines Eingabebereiches dem Produktionsleitsystem das Vorliegen eines bestimmten ausgewählten Störungsgrundes melden kann, der zu den Störungsgründen gehört, mit denen die Eingabebereiche belegt sind. Gemäß einer bevorzugten Ausführungsart sind die Eingabebereiche mit den häufigsten Störungsgründen belegt, die erfahrungsgemäß beim Betrieb der Produktionsanlage auftreten. Der mit der Abwicklung eines Auftrages betraute Maschinenführer oder sonstiger Benutzer ist nicht durch langwierige Eingabe von Störungsgründen zeitlich gebunden. Vielmehr genügt die Betätigung eines einzigen Eingabebereiches, der für den jeweiligen Störungsgrund vorgesehen ist. Hierdurch wird auch die vollständige Erfassung von Störungsgründen begünstigt. Soweit Störungsgründe durch die Belegung der Eingabebereiche nicht abgedeckt sind, können diese optional zusätzlich in herkömmlicher Weise durch Eingabe einer entsprechenden Beschreibung dokumentiert werden. Zudem erleichtert die mit der Belegung bestimmter Eingabebereiche verbundene Kategorisierung von Störungsgründen die Auswertung von Produktionsstörungen und begünstigt damit das Ergreifen von nachhaltigen Maßnahmen zum Beseitigen oder Reduzieren des Auftretens von Produktionsstörungen. Das Rechnernetz ist bevorzugt ein Intranet, d.h. ein internes, nicht öffentlich zugängliches Rechnernetz eines Produktionsbetriebs oder sonstiger Organisationseinheit, welche die Produktionsanlage betreibt.

Gemäß einer bevorzugten Ausführungsart betrifft die Erfindung ein Produktionsleitsystem für Produktionsanlagen zur Herstellung von Damenbinden, Slipeinlagen, Inkontinenzeinlagen und anderen Hygieneerzeugnissen, Vliesen, Geweben, Faserfloren und anderen flexiblen Flachmaterialien aus natürlichen und/oder künstlichen Fasern insbesondere für die Herstellung von Materialien für Hygieneartikel, Folien aus Kunststoff, Verbundfolien insbesondere aus Kunststoff und Metall, Beutel und andere Produkte auf der Basis von Folien oder Wattestäbchen.

Gemäß einer weiteren Ausführungsart ist das Eingabegerät ein Tastenpanel (Tastenbedienfeld) und sind die Eingabebereiche Tasten des Tastenpanels oder ist das Eingabegerät ein Touchscreen und sind die Eingabebereiche Schaltflächen (Tasten) des Touchscreens oder ist das Eingabegerät eine Bildschirmtastatur auf einem Bildschirm mit Maus und sind die Eingabebereiche Tasten der Bildschirmtastatur. Das Tastenpanel kann insbesondere als Tastatur mit voneinander baulich getrennten Tasten oder als Folientastatur ausgebildet sein. Bei einem Tastenpanel wird eine Taste durch Drücken oder Berühren betätigt. Bei einem Touchscreen wird eine Taste durch Berühren betätigt. Bei einer Bildschirmtastatur wird eine Taste durch Positionieren des Cursors mittels der Maus und Ausführen eines Klicks mit einer Maustaste betätigt. Die genannten Ausführungsarten ermöglichen eine für die Produktionsumgebung besonders robuste Ausführung des Produktionsleitsystems.

Gemäß einer weiteren Ausführungsart umfasst das Produktionsleitsystem eine Ampel oder andere optische oder akustische Signaleinrichtung, die mit der elektronischen Datenverarbeitungsanlage verbunden ist, wobei die elektronische Datenverarbeitungsanlage ausgebildet ist, die Signaleinrichtung so zu steuern, dass diese ein dem Andauern einer Produktionsstörung über eine definierte Zeitspanne fest zugeordnetes Signal abgibt, falls eine Produktionsstörung mindestens die definierte Zeitspanne andauert. Hierdurch werden Produktionsstörungen signalisiert, die aufgrund einer Dauer über eine definierte Zeitspanne von besonderer Wichtigkeit sind. Der Benutzer kann instruiert werden, nur dann mittels des Eingabegerätes einen Störungsgrund anzugeben, wenn die Signaleinrichtung eine wichtige Produktionsstörung signalisiert. Gemäß einer weiteren Ausführungsart kann die Signaleinrichtung mehrere verschiedene Signale angeben, um beispielsweise - mit einem ersten Signal - das Vorliegen einer Produktionsstörung und - mit einem zweiten Signal - das Vorliegen der Produktionsstörung über einen bestimmten Zeitraum, d.h. einer wichtigen Produktionsstörung, anzuzeigen. Ferner kann die Signaleinrichtung ausgebildet sein, noch mindestens ein drittes Signal abzugeben, wenn die Produktionsstörung über eine kurze definierte Zeitspanne andauert, die kürzer ist, als die definierte Zeitspanne, ab der eine wichtige Produktionsstörung vorliegt. Ein erstes Signal unterscheidet sich von einem zweiten Signal und ein zweites Signal von einem dritten Signal durch mindestens ein Merkmal, beispielsweise die Farbe bei Lichtsignalen oder die Tonhöhe bei akustischen Signalen. Gemäß einer bevorzugten Ausführungsart ist die Signaleinrichtung eine Ampel, die beispielsweise bei Nichtvorliegen einer Produktionsstörung ein grünes Signal, beim Andauern einer Produktionsstörung über eine kürzere als die definierte Zeitspanne ein gelbes Signal und ab Erreichen der definierten Zeitspanne ein rotes Signal ausgibt.

Gemäß einer weiteren Ausführungsart umfasst die elektronische Datenverarbeitungsanlage eine erste elektronische Datenverarbeitungsanlage, welche die Produktionssignale erfasst und durch Auswertung daraus Produktionsdaten ermittelt und die Betätigung von Eingabebereichen des Eingabegeräts erfasst, sowie eine zweite elektronische Datenverarbeitungsanlage, welche ausgebildet ist, die Produktionsdaten auszuwerten und/oder abzuspeichern und/oder zur Anzeige auf dem Monitor zu bringen und/oder über die zweite Datenschnittstelle dem Rechnernetz zur Verfügung zu stellen. Bei dieser Ausführungsart ist die erste elektronische Datenverarbeitungsanlage eine Schnittstelle zwischen der Produktionsanlage und der zweiten Datenverarbeitungsanlage, welche die Produktionsdaten einschließlich der Störungsmeldungen auswertet. Hierfür erfasst und wertet die erste elektronische Datenverarbeitungsanlage die Produktionssignale und die Betätigung von Eingabebereichen des Eingabegeräts aus und stellt die Produktionsdaten für die weitere Verarbeitung durch die zweite elektronische Datenverarbeitungsanlage zur Verfügung.

Gemäß einer weiteren Ausführungsart ist die erste elektronische Datenverarbeitungsanlage mit einer dritten Datenschnittstelle zur Verbindung mit dem Rechnernetz verbunden, und sind die erste elektronische Datenverarbeitungsanlage und die zweite elektronische Datenverarbeitungsanlage ausgebildet, über die zweite Datenschnittstelle und die dritte Datenschnittstelle sowie das Rechnernetz Daten auszutauschen. Bei dieser Ausführungsart erfolgt die Kommunikation zwischen der ersten und der zweiten elektronischen Datenverarbeitungsanlage über das Rechnernetz.

Gemäß einer weiteren Ausführungsart ist die erste elektronische Datenverarbeitungsanlage eine SPS-Steuerung und/oder die zweite elektronische Datenverarbeitungsanlage ein Panel-PC. Geeignete SPS-Steuerungen (Speicherprogrammierbare Steuerungen), die insbesondere die Funktion der Schnittstelle leisten können, hinreichend robust und mit verhältnismäßig geringem Aufwand programmierbar sind, stehen zur Verfügung. Ferner stehen Panel-PCs zur Verfügung, die für den rauen Arbeitseinsatz in der Produktion gut geeignet sind. Dies gilt insbesondere für Panel-PCs mit einem integrierten Touchscreen und ohne Gebläse, ohne CD-Laufwerk und ohne sonstige Bauteile mit drehenden Komponenten.

Gemäß einer weiteren Ausführungsart umfasst das Produktionsleitsystem genau zwei Tastenpanels. Gemäß einer weiteren Ausführungsart umfasst jedes Tastenpanel acht Tasten. Diese Ausführungsarten begünstigen eine übersichtliche und anwendungsfreundliche Eingabe von Störungsgründen.

Gemäß einer weiteren Ausführungsart ist die elektronische Datenverarbeitungsanlage mit einem Chip-Lesegerät oder einer anderen Vorrichtung zur Authentifizierung eines Benutzers verbunden und ausgebildet, anhand einer vom Benutzer der Authentifizierungseinrichtung zugeführten Chipkarte oder eines anderen Nachweises dem Benutzer den Zugang zur elektronischen Datenverarbeitungsanlage über Ein- und/oder Ausgabegeräte freizuschalten.

Hierdurch ist sichergestellt, dass nur autorisierte Benutzer Zugang zum Produktionsleitsystem erlangen, insbesondere um Aufträge zu bearbeiten. Zudem werden die Benutzer erfasst, welche die Bearbeitungen durchführen. Hierdurch können Manipulationen verhindert werden. Beispielsweise kann ein Chip-Lesegerät zusammen mit Chips verwendet werden. Die Chips können zugleich Bestandteil eines Personalerfassungssystems des Unternehmens sein, welches das Produktionsleitsystem betreibt.

Gemäß einer weiteren Ausführungsart umfasst das Produktionsleitsystem einen Schaltschrank, wobei der Monitor und das Tastenpanel auf einem Pult des Schaltschrankes angeordnet sind und die elektronische Datenverarbeitungsanlage zumindest teilweise innerhalb des Schaltschrankes angeordnet ist. Hierdurch sind Benutzerschnittstellen für den Benutzer im Produktionsbereich sicher und gut zugänglich untergebracht und ist die elektronische Datenverarbeitungsanlage zumindest teilweise im Schaltschrank geschützt untergebracht.

Gemäß einer weiteren Ausführungsart ist die erste elektronische Datenverarbeitungsanlage innerhalb des Schaltschrankes und die zweite elektronische Datenverarbeitungsanlage auf dem Pult des Schaltschrankes angeordnet. Hierbei ist gemäß einer bevorzugten Ausführungsart die erste elektronische Datenverarbeitungsanlage eine SPS-Steuerung und/oder die zweite elektronische Datenverarbeitungsanlage ein Panel-PC.

Gemäß einer weiteren Ausführungsart ist die Vorrichtung zur Authentifizierung auf dem Pult angeordnet. Hierdurch ist die Vorrichtung zur Authentifizierung im Produktionsbereich sicher und für den Benutzer gut zugänglich unterbringbar.

Gemäß einer weiteren Ausführungsart weist der Panel-PC mindestens eines der folgenden Merkmale auf: Touchscreen, passive Lüftung, kein Lüftergebläse, kein CD-Laufwerk, keine rotierenden Bauteile. Hierdurch wird eine im Produktionsbereich nachteilige zweiteilige Hardware (PC plus Monitor) und eine Beeinträchtigung des Betriebs durch Staub und sonstige Verunreinigungen vermieden sowie eine für den rauen Betrieb in der Produktion hinreichend robuste und stabile Ausführung ermöglicht.

Gemäß einer weiteren Ausführungsart ist im Schaltschrank mindestens eine der nachfolgenden Einrichtungen angeordnet: Schalter für Innenraumbeleuchtung, Innenraumbeleuchtung, mindestens eine Sicherung für Spannungsversorgung, mindestens eine Klemmleiste für Spannungsversorgung und Massepotential, mindestens ein Netzteil, mindestens eine Steckdose, mindestens eine Klemmleiste für externe Signale und Spannungsversorgung, mindestens eine Netzwerkdose, erste Datenschnittstelle, zweite Datenschnittstelle, dritte Datenschnittstelle, Einführungsmatrix für Leitungen, Notstromversorgung. Hierdurch werden sensible und den Benutzer ggf. gefährdende Bauteile vor der Umgebung geschützt und sicher im Schaltschrank untergebracht.

Die Erfindung wird nachfolgend anhand der anliegenden Zeichnungen eines Ausführungsbeispieles näher erläutert. In den Zeichnungen zeigen:
- Fig. 1: das Produktionsleitsystem bei geschlossenem Schaltschrank in einer Vorderansicht;
- Fig. 2: das Produktionsleitsystem in der Draufsicht;
- Fig. 3: Innenansicht des geöffneten Schaltschrankes;
- Fig. 4: Systemkomponenten mit Schnittstellen in einem grobschematischen Blockbild.

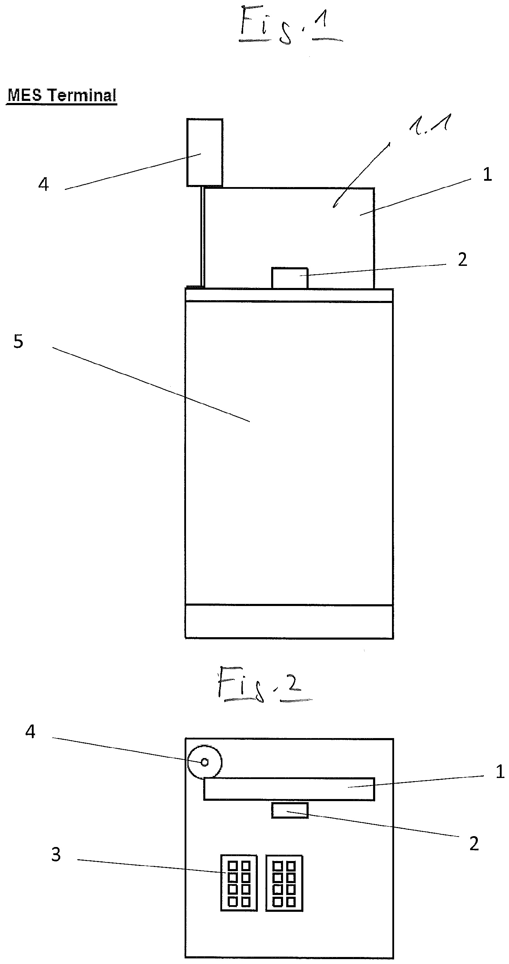

Gemäß Fig. 1 und 2 umfasst das Produktionsleitsystem einen Panel-PC 1 mit Touchscreen-Monitor 1.1, ein Chip-Lesegerät 2, zwei Tastenpanel 3, 4 und eine Signallampe 5, die oben auf dem Pult eines Schaltschrankes 6 angeordnet sind.

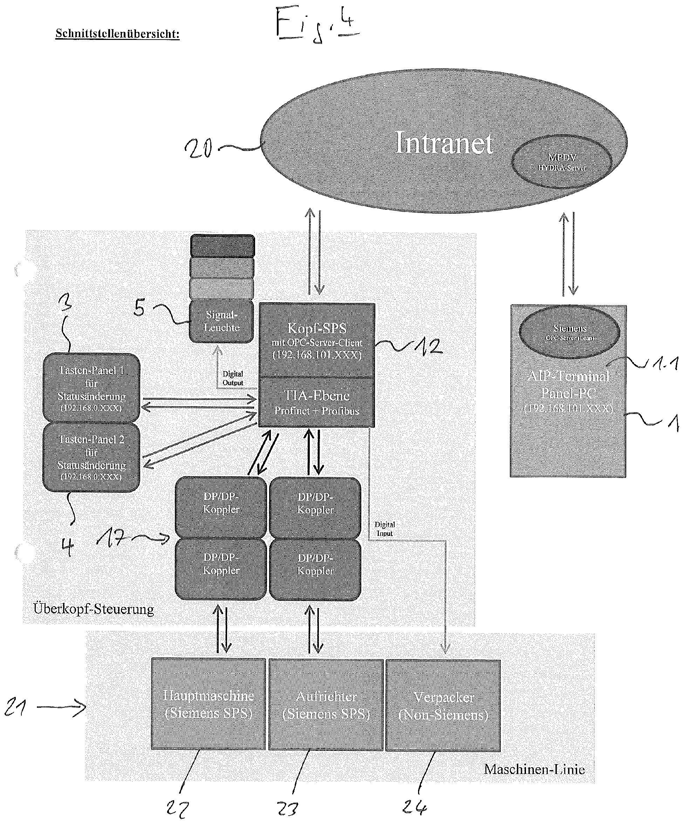

Die Signallampe 5 ist vorzugsweise als Ampel ausgeführt, um die Schwere einer Produktionsstörung anzuzeigen (vgl. Fig. 4). Ein grünes Licht zeigt eine ungestörte Produktion und ein rotes Licht eine wichtige Produktionsstörung an. Eine wichtige Produktionsstörung ist dadurch definiert, dass sie über eine bestimmte Zeitspanne andauert und deshalb der elektronischen Datenverarbeitungsanlage gemeldet werden soll. Ein gelbes Licht zeigt eine Produktionsstörung an, die noch nicht über die bestimmte Zeitspanne andauert und deshalb noch nicht an die Datenverarbeitungsanlage zu melden ist.

Auf der Oberseite des Pults kann zusätzlich eine Bedienungsanleitung abgelegt werden.

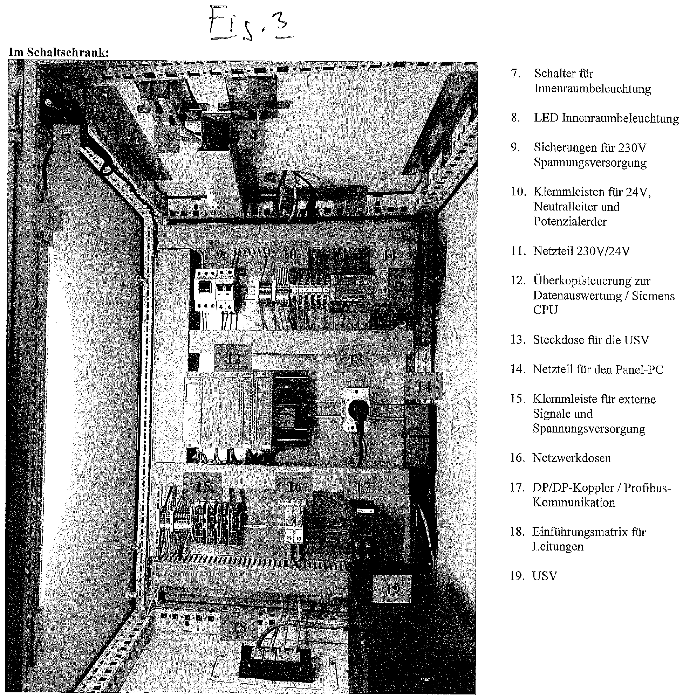

Gemäß Fig. 3 sind in dem Schaltschrank ein Schalter 7 für Innenraumbeleuchtung sowie eine LED-Innenraumbeleuchtung 8 angeordnet. Der Schalter 7 ist ein Türkontakt, der sich beim Öffnen der Tür schließt, um dann automatisch die Innenraumbeleuchtung 8 einzuschalten. Oben im Schaltschrank 6 sind an der Unterseite des Pultes die Anschlussseite der dort darin eingelassenen Tastenpanels 3, 4 erkennbar.

An der Rückseite des Schaltschrankes 6 sind in einer oberen Reihe Sicherungen 9 für eine 230 Volt-Spannungsversorgung, Klemmleisten 10 für 24 Volt, Neutralleiter und Potentialerder sowie ein Netzteil 11 angeordnet, das 230 Volt Wechselstrom gespeist wird und 24 Volt Gleichstrom liefert.

In einer mittleren Reihe ist eine Überkopfsteuerung bzw. SPS 12 angeordnet. Daneben befindet sich eine Steckdose 13 für eine unterbrechungsfreie Stromversorgung (USV). Daneben befindet sich wiederum ein Netzteil 14 für den Panel-PC 1.

In der untersten Reihe sind nebeneinander eine Klemmleiste 15 für externe Signale und die Spannungsversorgungen, Netzwerkdosen 16 sowie DP/DP-Koppler 17 (d.h. eine Profibus-Kommunikationsart) oder ein PN/PN-Koppler (d.h. eine Profinet-Kommunikationsart) für die Kommunikation der SPS 12 mit einer Produktionsanlage vorhanden. Gemäß einer bevorzugten Ausführungsart weist das Produktionsleitsystem mehrere DP/DP- oder PN/PN-Koppler auf, um mehrere Maschinen an ein Produktionsleitsystem anzuschließen.

Am Boden des Schaltschrankes ist eine Einführungsmatrix 18 für die Einführung von Leitung und von außen in den Schaltschrank vorhanden.

Schließlich sitzt auf dem Boden die USV 19.

Fig. 4 zeigt ein Blockbild des vorbeschriebenen Systems einschließlich der angesprochenen Schnittstellen. Gemäß diesem Blockbild kommunizieren die SPS und der Panel-PC über ein Intranet 20 miteinander. Dort ist auch ersichtlich, dass das Produktionsleitsystem über die DP/DP-Koppler 17 mit einer Produktionsanlage 21 kommuniziert, die außer einer Hauptmaschine 22 zur Produktion eines speziellen Produktes, einen Aufrichter 23 zum Aufrichten von Verpackungen und einen Verpacker 24 zum Verpacken des Produkts in den Verpackungen umfasst.

Auf dem Panel-PC 1 läuft eine MES (*manufacturing execution system*)-Software. Von einem übergeordneten ERP-System werden über eine Schnittstelle Stammdaten an die MES-Software übergeben. Ein ERP-System ist eine komplexe oder eine Vielzahl miteinander kommunizierender Anwendungssoftware bzw. IT-Systeme, die zur Unterstützung der Ressourcenplanung des gesamten Unternehmens eingesetzt werden können. Zu den Stammdaten, die an die MES-Software übergeben werden, zählen u.a. Betriebsauftragsnummer, Artikelnummer, Soll-Menge und Soll-Leistung (Stück/Minute).

Die MES-Software zählt alle Produktionsdaten und wertet sie aus. Stückzahlen werden hier gezählt und der Status der Produktionsanlage 21 (produziert oder produziert nicht) wird aufgezeichnet und vom Maschinenführer durch eine Störungsbeschreibung bewertet. Des Weiteren werden Aufträge dargestellt und können angemeldet werden. Auf diese Aufträge kann sich wiederum der Benutzer (Bediener) mit Hilfe des Chip-Lesegerätes 2 anmelden. Der Benutzer kann einen Betriebsauftrag anmelden, indem er aus einer ihm vorgeschlagenen Liste mit zuvor von der Arbeitsvorbereitung aktivierten Betriebsaufträgen den aktuellen auswählt.

Auf dem Panel-PC 1 wird als Schnittstelle zur SPS 12 ein OPC-Server installiert. So wird eine Standard-Kommunikation zum Austausch mit der SPS 12 aufgebaut.

Die SPS 12 ist die Schnittstelle zwischen der Produktionsanlage 21 und der MES-Software. Die Produktionsdaten, wie Stückzahlen oder ob die Produktionsanlage 21 in Betrieb ist oder nicht, werden erfasst und an das Datenformat der MES-Software angepasst und eingespielt.

Die Tastenpanels 3, 4 ermöglichen eine einfache Eingabe zur Bewertung von Störungsgründen der Produktion. Pro Tastenpanel 3, 4 stehen acht Tasten zur Verfügung. Diese acht Tasten sind mit den häufigsten Stillstandsgründen vorbelegt. Bei einer Störung kann der Maschinenführer durch kurzes Drücken einer Taste die Störung bewerten. Die SPS 17 leitet die Signale des Störungsgrundes bzw. die entsprechenden Produktionsdaten an den Panel-PC 1 und somit an die MES-Software weiter. Durch die einfache Eingabe von Störungsgründen wird der Maschinenführer entlastet und eine verbesserte Dokumentation sowie Auswertung von Störungsgründen ermöglicht.

Über das Intranet 20 können die Produktionsdaten einschließlich der Störungsgründe an einen zentralen Controller weitergeleitet werden.

## Patentansprüche

1. Produktionsleitsystem umfassend
• eine elektronische Datenverarbeitungsanlage (1, 12),
• eine erste Datenschnittstelle (17) der elektronischen Datenverarbeitungsanlage (1, 12) zum Übertragen von Produktionssignalen, die mit einer Produktionsanlage (21) verbindbar ist,
• mindestens ein Eingabegerät zur manuellen Dateneingabe (3, 4), das mit der elektronischen Datenverarbeitungsanlage (1, 12) verbunden ist,
• einen Monitor (1.1), der mit der elektronischen Datenverarbeitungsanlage (1, 12) verbunden ist,
• wobei die elektronische Datenverarbeitungsanlage (1, 12) ausgebildet ist, über die erste Datenschnittstelle (17) Produktionssignale zu erfassen, durch Auswerten erfasster Produktionssignale Produktionsdaten insbesondere über Produktionsstörungen zu ermitteln, auf dem Monitor (1.1) Produktionsdaten anzuzeigen und über das Eingabegerät (3, 4) eingegebene Störungsgründe für Produktionsstörungen auf dem Monitor (1.1) anzuzeigen und/oder abzuspeichern und/oder über eine mit der elektronischen Datenverarbeitungsanlage (1, 12) verbundene zweite Datenschnittstelle der elektronischen Datenverarbeitungsanlage einem Rechnernetz (20) zur Verfügung zu stellen, und
• wobei das Eingabegerät (3, 4) und/oder die elektronischen Datenverarbeitungsanlage (1, 12) ausgebildet ist, verschiedene Eingabebereiche des Eingabegeräts (3, 4) mit unterschiedlichen Störungsgründen für Produktionsstörungen zu belegen, sodass beim Betätigen eines ausgewählten Eingabebereiches der diesem Eingabebereich zugeordnete Störungsgrund an die elektronische Datenverarbeitungsanlage (1, 12) gemeldet wird.

2. Produktionsleitsystem nach Anspruch 1, wobei die elektronische Datenverarbeitungsanlage eine erste elektronische Datenverarbeitungsanlage (12) umfasst, welche die Produktionssignale erfasst und durch Auswertung daraus Produktionsdaten ermittelt und die Betätigung von Eingabebereichen des Eingabegeräts (3, 4) erfasst, sowie eine zweite elektronische Datenverarbeitungsanlage (1), welche ausgebildet ist, die Produktionsdaten auszuwerten und/oder abzuspeichern und/oder zur Anzeige auf dem Monitor (1.1) zu bringen und/oder über die zweite Datenschnittstelle dem Rechnernetz (20) zur Verfügung zu stellen.

3. Produktionsleitsystem nach Anspruch 1 oder 2, bei dem das Eingabegerät (3, 4) ein Tastenpanel ist und die Eingabebereiche Tasten des Tastenpanels sind oder bei dem das Eingabegerät ein Touchscreen ist und die Eingabebereiche Schaltflächen des Touchscreen sind oder bei dem das Eingabegerät eine Bildschirmtastatur mit Maus und die Eingabebereiche Tasten der Bildschirmtastatur sind.

4. Produktionsleitsystem nach einem der Ansprüche 1 bis 3, das eine Ampel oder andere optische oder akustische Signaleinrichtung (5) umfasst, die mit der elektronischen Datenverarbeitungsanlage verbunden ist, die ausgebildet ist, falls eine Produktionsstörung eine definierte Zeitspanne andauert, mittels der Signaleinrichtung ein Signal abzugeben.

5. Produktionsleitsystem nach einem der Ansprüche 1 bis 4, wobei die erste elektronische Datenverarbeitungsanlage (12) mit einer dritten Datenschnittstelle zur Verbindung mit dem Rechnernetz (20) verbunden ist, und die erste elektronische Datenverarbeitungsanlage (12) und die zweite elektronische Datenverarbeitungsanlage (1) ausgebildet sind, über die zweite Datenschnittstelle und dritte Datenschnittstelle sowie das Rechnernetz (20) Daten auszutauschen.

6. Produktionsleitsystem nach einem der Ansprüche 1 bis 5, bei dem die erste elektronische Datenverarbeitungsanlage eine SPS-Steuerung (12) und/oder die zweite elektronische Datenverarbeitungsanlage ein Panel-PC (1) ist.

7. Produktionsleitsystem nach Anspruch 6, bei dem der Panel-PC (1) mindestens eines der folgenden Merkmale aufweist: Touchscreen (1.1), passive Lüftung, kein Lüftergebläse, kein CD-Laufwerk, keine rotierenden Teile.

8. Produktionsleitsystem nach einem der Ansprüche 1 bis 7, das genau zwei Tastenpanel (3, 4) umfasst.

9. Produktionsleitsystem nach einem der Ansprüche 1 bis 8, bei dem jedes Tastenpanel (3, 4) acht Tasten umfasst.

10. Produktionsleitsystem nach einem der Ansprüche 1 bis 9, bei dem die elektronische Datenverarbeitungsanlage (1, 12) mit einem Chip-Lesegerät (2) oder einer anderen Vorrichtung zur Authentifizierung eines Benutzers verbunden ist und ausgebildet ist, anhand einer vom Benutzer der Vorrichtung zur Authentifizierung zugeführten Chipkarte oder anderen Nachweises dem Benutzer den Zugang zur elektronischen Datenverarbeitungsanlage (1, 2) über Ein- und/oder Ausgabegeräte (1.1) freizuschalten.

11. Produktionsleitsystem nach einem der Ansprüche 1 bis 10, das einen Schaltschrank (5) umfasst, wobei der Monitor (1.1) und das Eingabegerät (3, 4) auf einem Pult des Schaltschrankes (5) angeordnet sind und die elektronische Datenverarbeitungsanlage (1, 12) zumindest teilweise innerhalb des Schaltschrankes (5) angeordnet ist.

12. Produktionsleitsystem nach einem der Ansprüche 2 bis 11, bei dem die erste elektronische Datenverarbeitungsanlage (12) innerhalb des Schaltschrankes (5) und die zweite elektronische Datenverarbeitungsanlage (1) auf dem Pult des Schaltschrankes (5) angeordnet ist.

13. Produktionsleitsystem nach Anspruch 11 oder 12, bei dem die Vorrichtung zur Authentifizierung (2) auf dem Pult angeordnet ist.

14. Produktionsleitsystem nach einem der Ansprüche 1 bis 13, bei dem im Schaltschrank (5) mindestens eine der nachfolgenden Einrichtungen angeordnet ist: Schalter (7) für Innenraumbeleuchtung, Innenraumbeleuchtung (8), mindestens eine Sicherung (9) für Spannungsversorgung, mindestens eine Klemmleiste (10) für Spannungsversorgung und Massepotential, mindestens ein Netzteil (11, 14), mindestens eine Steckdose (13), mindestens eine Klemmleiste (15) für externe Signale und Spannungsversorgung, mindestens eine Netzwerkdose (16), erste Datenschnittstelle (17), zweite Datenschnittstelle, dritte Datenschnittstelle, Einführungsmatrix für Leitungen (18), Notstromversorgung (19).

## Geänderte Patentansprüche

### Geänderte Patentansprüche gemäss Regel 137(2) EPÜ.

1. Produktionsleitsystem umfassend
• eine elektronische Datenverarbeitungsanlage (1, 12),
• eine erste Datenschnittstelle (17) der elektronischen Datenverarbeitungsanlage (1, 12) zum Übertragen von Produktionssignalen, die mit einer Produktionsanlage (21) verbindbar ist,
• mindestens ein Eingabegerät zur manuellen Dateneingabe (3, 4), das mit der elektronischen Datenverarbeitungsanlage (1, 12) verbunden ist,
• einen Monitor (1.1), der mit der elektronischen Datenverarbeitungsanlage (1, 12) verbunden ist,
• wobei die elektronische Datenverarbeitungsanlage (1, 12) ausgebildet ist, über die erste Datenschnittstelle (17) Produktionssignale zu erfassen, durch Auswerten erfasster Produktionssignale Produktionsdaten insbesondere über Produktionsstörungen zu ermitteln, auf dem Monitor (1.1) Produktionsdaten anzuzeigen und über das Eingabegerät (3, 4) eingegebene Störungsgründe für Produktionsstörungen auf dem Monitor (1.1) anzuzeigen und/oder abzuspeichern und/oder über eine mit der elektronischen Datenverarbeitungsanlage (1, 12) verbundene zweite Datenschnittstelle der elektronischen Datenverarbeitungsanlage einem Rechnernetz (20) zur Verfügung zu stellen, und
• wobei das Eingabegerät (3, 4) ausgebildet ist, verschiedene Eingabebereiche des Eingabegeräts (3, 4) mit unterschiedlichen Störungsgründen für Produktionsstörungen zu belegen, sodass beim Betätigen eines ausgewählten Eingabebereiches der diesem Eingabebereich zugeordnete Störungsgrund an die elektronische Datenverarbeitungsanlage (1, 12) gemeldet wird.

2. Produktionsleitsystem nach Anspruch 1, wobei die elektronische Datenverarbeitungsanlage eine erste elektronische Datenverarbeitungsanlage (12) umfasst, welche die Produktionssignale erfasst und durch Auswertung daraus Produktionsdaten ermittelt und die Betätigung von Eingabebereichen des Eingabegeräts (3, 4) erfasst, sowie eine zweite elektronische Datenverarbeitungsanlage (1), welche ausgebildet ist, die Produktionsdaten auszuwerten und/oder abzuspeichern und/oder zur Anzeige auf dem Monitor (1.1) zu bringen und/oder über die zweite Datenschnittstelle dem Rechnernetz (20) zur Verfügung zu stellen.

3. Produktionsleitsystem nach Anspruch 1 oder 2, bei dem das Eingabegerät (3, 4) ein Tastenpanel ist und die Eingabebereiche Tasten des Tastenpanels sind oder bei dem das Eingabegerät ein Touchscreen ist und die Eingabebereiche Schaltflächen des Touchscreen sind oder bei dem das Eingabegerät eine Bildschirmtastatur mit Maus und die Eingabebereiche Tasten der Bildschirmtastatur sind.

4. Produktionsleitsystem nach einem der Ansprüche 1 bis 3, das eine Ampel oder andere optische oder akustische Signaleinrichtung (5) umfasst, die mit der elektronischen Datenverarbeitungsanlage verbunden ist, die ausgebildet ist, falls eine Produktionsstörung eine definierte Zeitspanne andauert, mittels der Signaleinrichtung ein Signal abzugeben.

5. Produktionsleitsystem nach einem der Ansprüche 1 bis 4, wobei die erste elektronische Datenverarbeitungsanlage (12) mit einer dritten Datenschnittstelle zur Verbindung mit dem Rechnernetz (20) verbunden ist, und die erste elektronische Datenverarbeitungsanlage (12) und die zweite elektronische Datenverarbeitungsanlage (1) ausgebildet sind, über die zweite Datenschnittstelle und dritte Datenschnittstelle sowie das Rechnernetz (20) Daten auszutauschen.

6. Produktionsleitsystem nach einem der Ansprüche 1 bis 5, bei dem die erste elektronische Datenverarbeitungsanlage eine SPS-Steuerung (12) und/oder die zweite elektronische Datenverarbeitungsanlage ein Panel-PC (1) ist.

7. Produktionsleitsystem nach Anspruch 6, bei dem der Panel-PC (1) mindestens eines der folgenden Merkmale aufweist: Touchscreen (1.1), passive Lüftung, kein Lüftergebläse, kein CD-Laufwerk, keine rotierenden Teile.

8. Produktionsleitsystem nach einem der Ansprüche 1 bis 7, das genau zwei Tastenpanel (3, 4) umfasst.

9. Produktionsleitsystem nach einem der Ansprüche 1 bis 8, bei dem jedes Tastenpanel (3, 4) acht Tasten umfasst.

10. Produktionsleitsystem nach einem der Ansprüche 1 bis 9, bei dem die elektronische Datenverarbeitungsanlage (1, 12) mit einem Chip-Lesegerät (2) oder einer anderen Vorrichtung zur Authentifizierung eines Benutzers verbunden ist und ausgebildet ist, anhand einer vom Benutzer der Vorrichtung zur Authentifizierung zugeführten Chipkarte oder anderen Nachweises dem Benutzer den Zugang zur elektronischen Datenverarbeitungsanlage (1, 2) über Ein- und/oder Ausgabegeräte (1.1) freizuschalten.

11. Produktionsleitsystem nach einem der Ansprüche 1 bis 10, das einen Schaltschrank (5) umfasst, wobei der Monitor (1.1) und das Eingabegerät (3, 4) auf einem Pult des Schaltschrankes (5) angeordnet sind und die elektronische Datenverarbeitungsanlage (1, 12) zumindest teilweise innerhalb des Schaltschrankes (5) angeordnet ist.

12. Produktionsleitsystem nach einem der Ansprüche 2 bis 11, bei dem die erste elektronische Datenverarbeitungsanlage (12) innerhalb des Schaltschrankes (5) und die zweite elektronische Datenverarbeitungsanlage (1) auf dem Pult des Schaltschrankes (5) angeordnet ist.

13. Produktionsleitsystem nach Anspruch 11 oder 12, bei dem die Vorrichtung zur Authentifizierung (2) auf dem Pult angeordnet ist.

14. Produktionsleitsystem nach einem der Ansprüche 1 bis 13, bei dem im Schaltschrank (5) mindestens eine der nachfolgenden Einrichtungen angeordnet ist: Schalter (7) für Innenraumbeleuchtung, Innenraumbeleuchtung (8), mindestens eine Sicherung (9) für Spannungsversorgung, mindestens eine Klemmleiste (10) für Spannungsversorgung und Massepotential, mindestens ein Netzteil (11, 14), mindestens eine Steckdose (13), mindestens eine Klemmleiste (15) für externe Signale und Spannungsversorgung, mindestens eine Netzwerkdose (16), erste Datenschnittstelle (17), zweite Datenschnittstelle, dritte Datenschnittstelle, Einführungsmatrix für Leitungen (18), Notstromversorgung (19).
